# EUROPÄISCHE PATENTSCHRIFT

(11) **EP 2 708 450 B1**
(45) Veröffentlichungstag und Bekanntmachung des Hinweises auf die Patenterteilung: **18.11.2015**
(21) Anmeldenummer: 13184324.5
(22) Anmeldetag: 13.09.2013
(51) Int. Cl.: B62D 33/02, B62D 33/04

(54) **Außenrahmen für einen Lastfahrzeug-Aufbau**
Frame structure for a cargo vehicle
Cadre extérieur pour de corps de véhicule

(30) Priorität: 14.09.2012 DE 102012108604
(43) Veröffentlichungstag der Anmeldung: 19.03.2014
(73) Patentinhaber: Sommer GmbH, 06636 Laucha an der Unstrut (DE)
(72) Erfinder: Tietje, Alexander, 96269 Großheirath (DE)
(74) Vertreter: Weickmann & Weickmann

(56) Entgegenhaltungen:
- EP-A1- 2 353 904
- DE-A1- 19 714 678
- DE-A1- 19 949 372
- US-A1- 2002 145 299

## Beschreibung

### I. Anwendungsgebiet

Die Erfindung betrifft einen Außenrahmen sowie einen damit ausgestatteten Fahrzeugaufbau, sowie ein Verfahren zum Herstellen eines solchen Außenrahmens.

### II. Technischer Hintergrund

Bei Nutzfahrzeugen, beispielsweise Lastkraftwagen und deren Anhängern oder auch Sattel-Aufliegern, besteht das tragende Chassis in der Regel aus einem Leiter-Rahmen mit umgebendem Außenrahmen, die gemeinsam die notwendige Stabilität bieten.

Der Kern des Chassis sind in der Regel zwei in Längsrichtung des Fahrzeugs verlaufende, zueinander beanstandete Längsträger, sowie darauf aufliegende oder an diesen verschweißte und in Querrichtung nach außen ragende Querträger. Die freien Enden dieser Querträger werden miteinander verbunden, indem sie an dem außen über die Enden der Querträger durchgehenden Außenrahmen befestigt werden.

Dabei ist es häufig so, dass der Außenrahmen nicht vom Hersteller des Nutzfahrzeuges mitgeliefert wird, sondern von dem Aufbauten-Hersteller, der auf das Fahrzeug einen spezifischen, vom Kunden gewünschten Aufbau, erstellt und aufsetzt.

Entsprechend den verschiedenen Anwendungszwecken der Fahrzeuge, also Art des Ladegutes, Befestigungsart des Ladegutes, Begrenzung des Laderaumes durch feste Bordwände oder Planen, die Art der verwendeten Rungen und weitere Details sind ganz unterschiedliche Arten von Außenrahmen bekannt.

Das Bestreben der Aufbautenhersteller geht dahin, einen Außenrahmen zur Verfügung zu haben, der mehrere Anwendungsfälle abdeckt, so dass nicht für jeden Anwendungsfall ein neuer Außenrahmen geschaffen werden muss. Dies unter anderem deshalb, da das Hauptprofil des Außenrahmens in der Regel ein Strangpress-Profil ist, und die Herstellung eines neugestalteten Strangpressprofiles ganz erhebliche Erstinvestitionen erfordert.

Allerdings wird der Außenrahmen umso aufwändiger und komplizierter, je mehr Funktionen und Einsatzzwecke er gleichzeitig erfüllen soll.

Aus diesem Grund gibt es - je nach Aufbautenhersteller und dessen Kundenspektrum - einen Mittelweg zwischen maximaler Flexibilität und maximalem Aufwand für einen solchen Außenrahmen.

Dabei spielt auch die Materialwahl für den Außenrahmen eine Rolle: Aus Kostengründen und zum einfachen Verschweißen mit den Querträgern ist Stahl als Werkstoff zu bevorzugen. Je komplizierter die Gestaltung des Außenrahmens wird, umso eher wird jedoch ein Punkt erreicht, bei dem die Gestaltung mittels Stahl nicht mehr möglich ist, sondern zum Beispiel auf Aluminium ausgewichen werden muss, was die Kosten erhöht und gleichzeitig die Lebensdauer erniedrigt.

In diesem Zusammenhang ist aus der DE 199 49 372 A1 ein Außenrahmen bekannt, der ein etwa C-förmiges Hauptprofil aufweist, dessen oberer frei endender Schenkel eine doppelte Kröpfung zum Einlegen des Ladebodens aufweist, und bei dem am Übergang vom oberen freien Schenkel zum verbindenden mittleren Schenkel eine zur Außenseite hin offene Einbuchtung vorhanden ist, deren oberes freies Ende gegenüber dem unteren freien Ende um einen Abstand nach innen zurückversetzt ist.

Die diese Einbuchtung bildendenden Einbuchtungs-Schenkel sind in Verlaufsrichtung durchgehend ausgebildet und weisen keine inbesondere zueinander fluchtenden Durchbrüche auf.

In diese Einbuchtung können Zurradapter eingehängt werden, aber Zurrhaken können daran nicht befestigt werden.

### III. Darstellung der Erfindung

### a) Technische Aufgabe

Es ist daher die Aufgabe gemäß der Erfindung, einen Außenrahmen Erstellung und das Herstellungsverfahren hierfür zur Verfügung zu stellen, mit dem ein Außenrahmen erzielt werden kann, der bei geringem baulichen Aufwand dennoch eine Reihe unterschiedlicher Anwendungszwecke erfüllen kann.

### b) Lösung der Aufgabe

Diese Aufgabe wird durch die Merkmale der Ansprüche **1** und **13** gelöst. Vorteilhafte Ausführungsformen ergeben sich aus den Unteransprüchen.

Der erfindungsgemäße Außenrahmen besteht aus einem Hauptprofil, welches im Querschnitt betrachtet etwa eine U- oder C-Form besitzt, also zwei frei auslaufende Schenkel und einen diese beiden freien Schenkel verbindenden mittleren Schenkel aufweist. Dabei wird die Seite, auf der sich der mittlere Schenkel befindet, als die Außenseite des Hauptprofils bezeichnet.

Dass Hauptprofil besteht aus Blechmaterial gleicher Dicke und kann daher als Blechbiegeteil hergestellt werden.

Die Verlaufsrichtung des mittleren Schenkels im Querschnitt des Hauptprofiles wird für den Zweck der vorliegenden Anmeldung als die vertikale Richtung bezeichnet.

Dabei ist der obere freie Schenkel spezifisch gestaltet:
In seinem mittleren Bereich weist dieser obere freie Schenkel zwei gegenläufige Kröpfungen, vorzugsweise um jeweils **90**°, und somit eine Z-Form auf.

Das tieferliegende Ende des oberen freien Schenkels gegenüber dem mittleren Bereich des oberen freien Schenkels ergibt den notwendigen Versatz, um die Enden des querverlaufenden Ladebodens dort einzulegen.

Weiterhin ist der mittlere Schenkel an seinem Übergang zum oberen freien Schenkel auf besondere Art und Weise gestaltet, denn an dieser Stelle befindet sich eine zur Außenseite hin offene Einbuchtung , die im Querschnitt etwa U-förmig ist, wobei das obere freie Ende gegenüber dem unteren freien Ende dieser U-förmigen Einbuchtung um einen Abstand nach innen zurück versetzt ist.

Dadurch ist es nun möglich - in Längsrichtung des Hauptprofiles beabstandet - jeweils Paare von Durchbrüchen anzuordnen, wobei bei jedem Paar der obere Durchbruch im oberen Einbuchtungschenkel sowie im oberen Freien Schenkel und der untere Durchbruch im unteren Einbuchtungsschenkel vorhanden ist und beide zueinander fluchten. Der obere Durchbruch kann zur Außenseite hin auch offen sein.

Durch ein solches Paar von Durchbrüchen kann bei Bedarf etwa vertikal ein Zurrhaken eingeschoben werden, vorzugsweise von oben eingeschoben werden, sodass er beide Durchbrüche des Paares durchläuft, und danach an seinem unteren Ende eine Rückzugssperre an ihm montiert werden, die das Herausziehen des Zurrhakens aus den Durchbrüchen nach oben verhindert.

Ebenso ist das obere Ende des Zurrhakens so gestaltet, dass dieser zwar durch den oberen Durchbruch, aber nicht durch den unteren Durchbruch des Paares passt, weshalb der obere Durchbruch größer dimensioniert ist als der untere Durchbruch.

Da im Querschnitt der Zurrhaken kleiner dimensioniert ist als beide Durchbrüche, kann der Zurrhaken in den Durchbrüchen vertikal bewegt werden bis zum jeweiligen Anschlag gebildet aus der Auszugssperre am unteren Ende einerseits und ein verdicktes Ende am oberen Ende andererseits oder umgekehrt.

Bei Nicht-Bedarf kann der Zurrhaken soweit nach unten geschoben werden, dass er nicht über die Oberseite des oberen freien Schenkels vorsteht und damit beim Beladen kein Hindernis darstellt. Er endet dann oben in dem Freiraum des Hauptprofiles zwischen oberem und unterem freien Schenkel der Einbuchtung.

Durch den Versatz in Form eines Abstandes zwischen oberem Einbuchtungsschenkel und unterem Einbuchtungsschenkel entsteht eine in Längsrichtung durchgehende Lücke zwischen dem oberen Einbuchtungsschenkel und einer z.B. außen an dem mittleren Schenkel des Außenrahmenprofiles anliegenden und darüber hinaus vorstehenden Bordwand, in die ein Zurradapter eingeführt werden kann.

Die Zurradapter sind L-förmig mit einem langen und einem kurzen Schenkel und einem Zwischenwinkel von in der Regel etwas weniger als 90°. Wenn der lange Schenkel, in der sich die Öse zum Hindurchführen eines Spanngurtes befindet, fast parallel zum Ladeboden positioniert wird, kann der kurze Schenkel des Zurradapters durch den Abstand hindurch in die Einbuchtung geführt werden. Nach dem Aufstellen des langen Schenkels, zum Beispiel durch den Zug eines daran nach oben ziehenden Spanngurtes, ist der kurze Schenkel formschlüssig in der Einbuchtung gehalten. Auf diese Art und Weise kann ein Zurradapter an beliebiger Stelle, unabhängig von der Position der Durchbrüche, im Abstand des Hauptprofiles positioniert werden.

Ferner umfasst der Außenrahmen ein erstes oder ein zweites Ergänzungsprofil.

Vorzugsweise bestehen sowohl das Hauptprofil als auch das Ergänzungsprofil aus Stahl, denn die Form des Hauptprofils und erst recht die des Ergänzungsprofils ist durch die erfindungsgemäße Gestaltung so einfach gehalten, dass sowohl das Hauptprofil als auch beide Ergänzungsprofile als Blechbiegeteile hergestellt werden kann.

Das erste Ergänzungsprofil besitzt zwei Funktionen, indem es im Querschnitt z-förmig ist mit zwei gegenläufigen Biegungen um jeweils etwa 90°. Es wird in seiner Längsrichtung parallel zur Längsrichtung des Hauptprofiles montiert, und liegt mit einem seiner beiden frei auslaufenden Schenkel, nämlich dem nach oben weisenden frei auslaufenden Schenkel, an der Außenseite des mittleren Schenkels des Hauptprofils an.

Der nach unten weisende frei auslaufende Schenkel des ersten Ergänzungsprofils befindet sich damit im Abstand zu der Außenseite des mittleren Schenkel des Hauptprofils.

Dadurch kann der nach unten weisende frei auslaufende Schenkel des ersten Ergänzungsprofils benutzt werden, um die von oben herabreichenden Spannhaken zum Herabspannen der Plane eines Planen-Aufbaus daran einzuhängen.

Das erste Ergänzungsprofil kann - wenn nur diese Funktion des ersten Ergänzungsprofils gewünscht wird - so tief am Hauptprofil montiert werden, dass das Ergänzungsprofil nicht über die Höhe der Oberseite des Hauptprofils, also des oberen freien Schenkels des Hauptprofils, vorsteht.

Falls jedoch zusätzlich ein Palettenanfahrschutz durch das Ergänzungsprofil geboten werden soll, wird das Ergänzungsprofil so montiert, dass es mit seinem nach oben weisenden Schenkel über die Oberseite des Hauptprofils vorsteht, und dieser Überstand dient als Anschlag für eine in Querrichtung beim Beladen herangefahrene Palette. Dies soll verhindern, dass im Fall des Anfahrens die außerhalb dieses Ergänzungsprofils vertikal verlaufende Plane eines Planenaufbaus durch das Anfahren mit einer Palette beschädigt wird. Um das Ergänzungsprofil am Hauptprofil in zwei unterschiedlichen Höhen anordnen zu können, sind beim Ergänzungsprofil und/oder beim Hauptprofil Fixiervorrichtungen auf zwei unterschiedlichen Höhen vorhanden.

Die Fixiervorrichtungen sind beispielsweise einfache Durchgangs-Bohrungen im Ergänzungsprofil" durch die hindurch das Ergänzungsprofil am Hauptprofil z.B. vernietet, aber auch verschweißt oder verschraubt, werden kann.

Das zweite Ergänzungsprofil ist ein U- Profil mit insbesondere unterschiedlich langen freien Schenkeln, welches mit der Öffnung nach unten am Hauptprofil befestigt wird und lediglich die Funktion des Einhängens von Planenhaken hat. Es wird bei einem Aufbau eingesetzt, der - zumindest im unteren Bereich seiner Seitenwände -feste, abklappbare Bordwände besitzt. Denn dann werden in Längsrichtung beanstandet an der Außenseite des Hauptprofiles Bordwand-Gelenke montiert, die die Bordwände tragen, und im Abstand zwischen den Bordwand-Gelenken wird jeweils ein zweites Ergänzungsprofil montiert, um die oberhalb der Bordwand in der Regel vorhandene Plane nach unten abspannen zu können.

Hauptprofil und Ergänzungsprofil sind vor der Verbindung miteinander vorzugsweise Einzelteile, beide zusammen können jedoch auch bereits einstückig hergestellt werden. Dann ist jedoch die variable Höhenlage des Ergänzungsprofils zum Hauptprofil nicht mehr gegeben und auch nicht die kostengünstige Herstellmöglichkeit als Blechbiegeteil.

Durch die getrennte Herstellung von Hauptprofil und Ergänzungsprofilen kann stattdessen ein Baukasten zum Herstellen eines Außenrahmens geschaffen werden, der neben dem beschriebenen Hauptprofil und den beschriebenen Ergänzungsprofilen Zurrhaken und Zurradapter passend zu den Durchbrüchen im Hauptprofil enthält.

Aus diesen Einzelteilen lassen sich je nach Bedarf außen Rahmen mit einem unterschiedlichen Funktionsumfang auf einfache Art und Weise erstellen. Zusätzlich kann ein solcher Baukasten noch Rungenlager und/oder Bordwände und/oder Bordwandgelenke umfassen und/oder die Fixiermittel, um Ergänzungsprofil und Hauptprofil miteinander zu verbinden.

Ein Rungenlager ist ein Bauteil, auf welches die Runge eines Aufbaus von oben aufgesteckt wird, und dieses Rungenlager kann an der gewünschten Stelle am Hauptprofil befestigt, insbesondere verschweißt, werden.

Falls der Aufbau, der auf diesen Außenrahmen aufgebaut wird, feste, abklappbare Bordwände aufweist, können die hierfür benötigten Bordwandgelenke, an welchen anschließend die Bordwände befestigt werden, ebenfalls an den gewünschten Stellen in Längsrichtung am Hauptprofil befestigt, insbesondere verschweißt, werden.

Auf diese Art und Weise kann durch ein sehr vereinfachtes Verfahren ein Außenrahmen hergestellt werden:
Zuerst werden das Hauptprofil und die beiden Ergänzungsprofile hergestellt, indem entsprechende ebene Blechzuschnitte erzeugt werden, die anschließend zu den entsprechenden Profilen gebogen werden. Vorher werden im Zuschnitt für das Hauptprofil noch die Durchbrüche ausgeschnitten, vorzugsweise mittels Laserschneiden. Die notwendigen Durchgangs-Bohrungen in den Ergänzungsprofilen werden ebenfalls vorzugsweise vor dem Biegen hergestellt.

Dann wird an dem Hauptprofil wahlweise entweder das erste oder das zweite Ergänzungsprofil auf der gewünschten Höhe fixiert und gegebenenfalls die Bordwandgelenke.

Vorher oder nachher wird je ein Zurrhaken durch ein Paar von Durchbrüchen, insbesondere von oben her, eingeschoben und das unten aus dem

Paar von Durchbrüchen vorstehende Ende mit einer Rückzugsperre versehen.

### c) Ausführungsbeispiele

Ausführungsformen gemäß der Erfindung sind im Folgenden beispielhaft näher beschrieben. Es zeigen:
- Fig. **1**a) - c):: den Außenrahmen mit einem ersten Ergänzungsprofil in einer ersten Montagelage,
- Fig. **2**a) - c):: den Außenrahmen mit einem ersten Ergänzungsprofil in einer zweiten Montagelage,
- Fig. **3**a) - c):: den Außenrahmen mit einem zweiten Ergänzungsprofil,
- Fig. **4:**: eine Seitenansicht auf einen Außenrahmen.

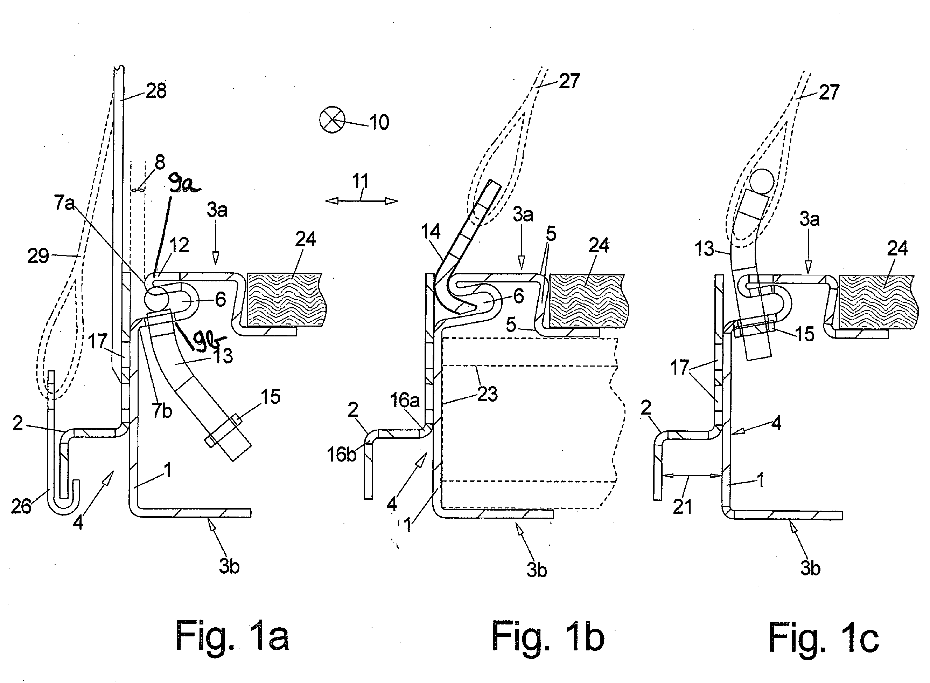

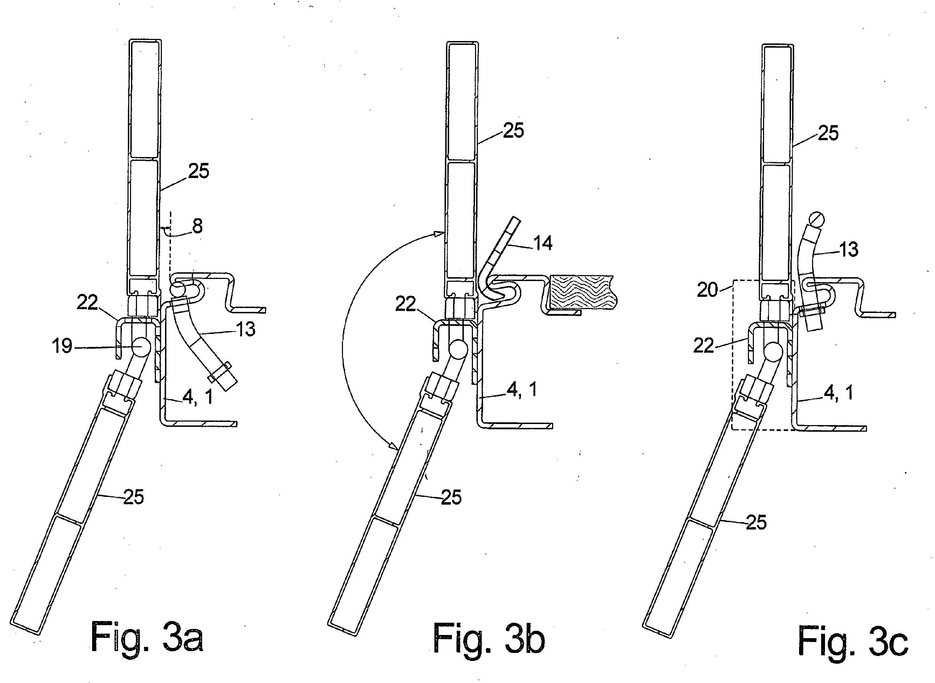

Die **Figuren 1a, b****,** **c bis 3a****,** **b, c** zeigen jeweils - wie am besten anhand der Fig. **1**b) zu erkennen - einen Schnitt durch das Außenrahmenprofil, also betrachtet in Längsrichtung **10**, zum Beispiel der Fahrtrichtung des entsprechenden Fahrzeuges.

Wie in Fig. **1**b) angedeutet, geht das Außenrahmenprofil über die freien Enden der Querträger **23** durch und ist mit diesen verbunden, in der Regel verschweißt.

Der Außenrahmen besteht - wie die Schnittdarstellungen zeigen - aus einem Hauptprofil **1** und einem auf dessen Außenseite befestigten, in der Regel verschweißten, Ergänzungsprofil **2** oder **22.**

Dabei besitzt das Hauptprofil **1** immer die gleiche Gestalt und Dimensionierung, und ist in Längsrichtung **10** betrachtet etwa C-förmig, mit einem außen vertikal stehenden mittleren Schenkel **4** von dem am oberen und unteren Ende ein jeweils zur Längsmitte des Fahrzeuges hinweisender, frei endender Schenkel **3a), 3b),** abstrebt.

Als Außenseite des Hauptprofils wird demnach diejenige Seite definiert, die von den freien Enden der frei endenden Schenkel **3a), 3b)** wegweist.

Der obere frei endende Schenkel **3a** weist zwei gegenläufige Kröpfungen **5** um jeweils etwa **90** Grad auf, die bewirken, dass das freie Ende dieses frei endenden Schenkels **3** a tiefer liegt als der zum mittleren Schenkel **4** hinweisende Bereich. In dem dadurch entstehenden Absatz liegt der eigentliche Ladeboden **24** des Nutzfahrzeuges auf, der in der Regel aus Brettern besteht.

Ferner weist das Hauptprofil **1** am Übergang zwischen dem mittleren Schenkel **4** und oberen frei endenden Schenkel **3a,** also im oberen Ende des mittleren Schenkels **4,** eine U-förmige Einbuchtung **6** auf, die nach außen offen ist.

Das obere freie Ende **7a** dieser Einbuchtung **6,** welches gebildet wird durch die etwa U-förmige Umbiegung des Hauptprofiles von der Einbuchtung **6** in den oberen frei endenden Schenkel **3a,** steht dabei gegenüber dem unteren freien Ende **7b** der Einbuchtung **6** um den Abstand **8** zurück.

Die Einbuchtung **6** ist dabei so knapp unterhalb dem oberen frei endenden Schenkel **3a** angeordnet, dass sich die entsprechenden Teile des Hauptprofiles, also oberer Teil der Einbuchtung **6** und oberer frei endender Schenkel **3a,** annähernd berühren oder tatsächlich berühren.

Diese Einbuchtung **6** und der damit gebildete Abstand **8** erfüllen verschiedene Zwecke, jedoch wird der Abstand **8** auf seiner Außenseite durch ein dort vorhandenes Bauteil begrenzt:

Bei der Bauform des Außenrahmens gemäß der **Figuren 1a, b, c** ist dies ein erstes Ergänzungsprofil **2,** welches zwei gegenläufige **90**-Grad-Kröpfungen aufweist und deshalb Z-förmig ist.

Dieses erste Ergänzungsprofil **2** wird mit dem nach oben weisenden Schenkel auf der Außenseite des mittleren Schenkels **4** des Hauptprofiles **1** befestigt, in aller Regel verschweißt. Zu diesem Zweck sind in diesem Schenkel des ersten Ergänzungsprofiles **2** in Längsrichtung **10** beabstandet und in zwei vertikal beabstandeten Reihen übereinander Durchgangs-Bohrungen **17** vorhanden, durch welche hindurch dieses Ergänzungsprofil **2** am Hauptprofil **1** verschweißt werden kann.

Der nach unten weisende Schenkel dieses ersten Ergänzungsprofiles **2** verläuft durch die doppelte gegenläufige Kröpfung in einem Abstand **21** zum mittleren Schenkel **4,** und kann dadurch zum Einhängen sogenannter Planenhaken **26** bei einem Planenaufbau verwendet werden, mit dem die seitliche Plane straff nach unten abgespannt wird.

Bei der Bauform gemäß der **Figuren 1a** **- c** reicht der nach oben weisende Schenkel des ersten Ergänzungsprofils **2** lediglich bis zur Höhe der Oberkante des Hauptprofiles **1,** also bis zur Oberseite des oberen frei endenden Schenkels **3a.**

Damit ist der Abstand **8** auf der Außenseite durch das erste Ergänzungsprofil **2** und auf der Innenseite durch den U-förmig gebogenen Übergang vom oberen freien Schenkel **3** a in die Einbuchtung **6** des mittleren Schenkels **4** begrenzt.

Dieser Abstand **8** ist so bemessen - wie in **Figur 1b** dargestellt - dass die üblichen hakenförmigen Zurradapter **14,** an denen Spanngurte **27** zur Ladungssicherung befestigt sind, an jeder beliebigen Längsposition durch den Abstand **8** mit ihrer gebogenen Spitze eingefädelt werden können.

Sobald der in der Regel schräg nach oben von dem Zurradapter **14** abgehende Spanngurt **27** gespannt wird, nimmt auch der lange Schenkel des hakenförmigen Zurradapters **14** diese schräg nach oben weisende Position ein, wodurch seine gekröpfte Spitze in die Einbuchtung **6** hineinragt. Solange der Spanngurt **27** unter Spannung steht, und der lange Schenkel des Zurradapters **14** nicht annähernd in die Horizontale herabgedreht werden kann, ist der Zurradapter **14** zuverlässig im Außenrahmen formschlüssig verhakt.

Im Gegensatz zu den Zurradaptern **14,** die fest in den Endschlaufen von Spanngurten **27** eingearbeitet sind, werden zur Ladungssicherung häufig auch Zurrhaken **13** verwendet, die bei Nichtgebrauch im Außenrahmen verbleiben sollen, und durch deren Öse nur bei Bedarf ein Spanngurt **27** hindurch gefädelt wird.

Diese Zurrhaken **13** sollen bei Nichtbedarf nicht über die Ladeebene, also die Oberseite des Ladebodens **24** und des oberen frei endenden Schenkels **3a,** vorstehen, und dennoch unverlierbar gehalten sein.

Zu diesem Zweck befinden sich in dem Hauptprofil **1** in Längsrichtung **10** beabstandet jeweils zwei Durchbrüche **12** fluchtend übereinander, nämlich einmal im unteren Schenkel der Einbuchtung **6** und einmal in der U-förmigen Biegung vom oberen Schenkel der Einbuchtung **6** bis in den oberen frei endenden Schenkel **3a.**

Dieser obere Durchbruch **12** ist zur Außenseite hin offen, und in Längsrichtung **10** etwas länger als der untere Durchbruch **12.**

Durch dieses Paar von Durchbrüchen **12** kann nun von oben her ein in der Blickrichtung der Längsrichtung **10** leicht gebogener Zurrhaken **13** durch beide Durchbrüche **12** hindurch eingefädelt werden, dessen oberes Ende verdickt ist, und zwar betrachtet von der Seite her, also das obere Ende des Zurrhakens **13** in Längsrichtung **10** länger ist als die darunter befindlichen Teile des Zurrhakens **13** und insbesondere länger als der untere Durchbruch **12** in Längsrichtung **10** ist.

Deshalb fällt der Zurrhaken **13** nicht durch die beiden Durchbrüche **12** durch, sondern bleibt mit seinem verdickten oberen Ende auf dem unteren Durchbruch **12,** also dem unteren Schenkel der Einbuchtung **6,** liegen, wie in Figur **1a** in etwa dargestellt.

Das verdickte obere Ende des Zurrhakens **13** ist dabei so dimensioniert, dass es in diesem Zustand nicht über die Oberseite des Hauptprofiles **1,** also über den oberen Durchbruch **12** hinweg, vorsteht.

Dieses Einfädeln gelingt, da beim erstmaligen Einfädeln der Zurrhaken **13** noch nicht mit der nahe seinem unteren Ende angeordneten Rückzugsperre **15** ausgestattet ist, die erst nach dem Einfädeln am Zurrhaken **13** montiert wird, und ebenfalls größer ist als der untere Durchbruch **12.** Dadurch kann der Zurrhaken **13** bei Bedarf hochgezogen werden, und steht dann auch mit seiner Öse über den Ladeboden **24** und das Hauptprofil **1** vor, so dass ein Spanngurt **27** leicht hindurchgefädelt werden kann, aber das Herausziehen nach oben ist nur möglich, bis die Rückzugsperre **15** an der Unterseite des unteren Durchbruches **12,** also des unteren Schenkels der Einbuchtung **6,** anliegt.

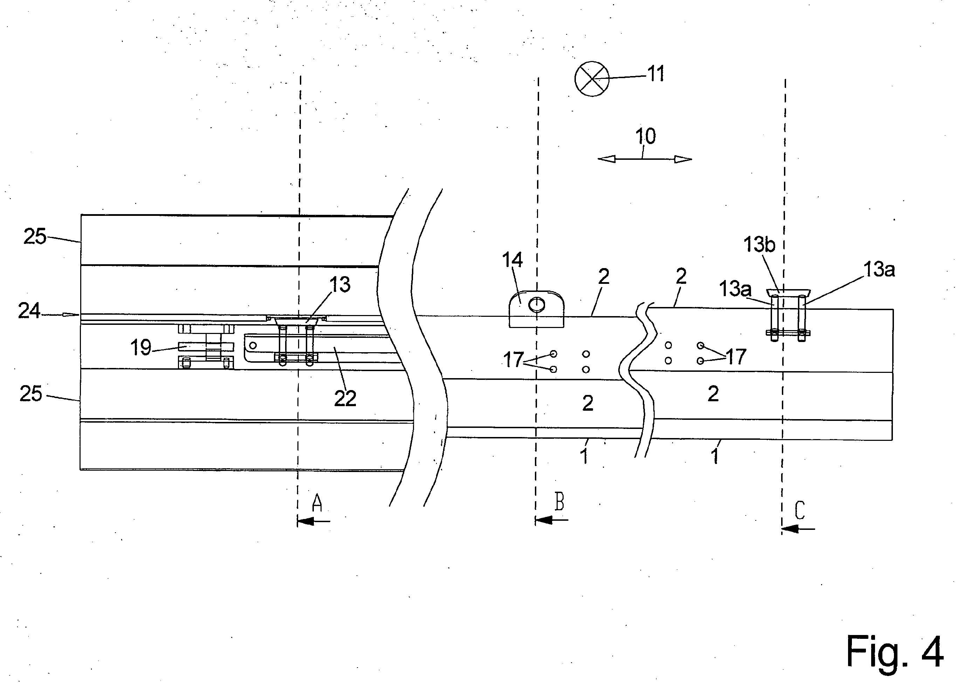

Wie am besten **Figur 4** zeigt, besteht ein solcher Zurrhaken **13** häufig aus zwei in Längsrichtung **10** beabstandeten vertikalen Schenkeln **13a,** die einstückig oder nachträglich verbunden sind mit einem die oberen Enden dieser beiden vertikalen Schenkel **13a** verbindenden oberen Querbolzen **13b,** der das obere Ende bildet.

Nach erstmaligem Einfädeln durch ein Paar von Durchbrüchen **12** wird als Rückzugsperre **15** ein unterer Querbolzen montiert.

Die Länge von oberem Querbolzen **13b** und der Rückzugsperre **15** als unterem Querbolzen ist dabei so bemessen in Relation zu den Durchbrüchen **12,** dass eben der obere Querbolzen **13b** den oberen Durchbruch **12,** aber nicht den unteren Durchbruch **12** durchdringen kann, und die Rückzugsperre **15** nicht den unteren Durchbruch **12,** der auch aus zwei separaten unteren Durchbrüchen für die beiden vertikalen Schenkel **13a** bestehen kann, durchdringen kann.

Wenn nun bei der Bauform gemäß der **Figuren 1a, b****,** **c**, wie insbesondere an Hand der Figur **1** erkennbar, beim Beladen des Nutzfahrzeuges eine (nicht dargestellte) Palette oder ein anderes Ladegut auf dem Ladeboden **24** ganz an den Rand verfahren würde, würde dieses Ladegut die Seitenplane **28** erreichen und bei entsprechendem Druck beschädigen können.

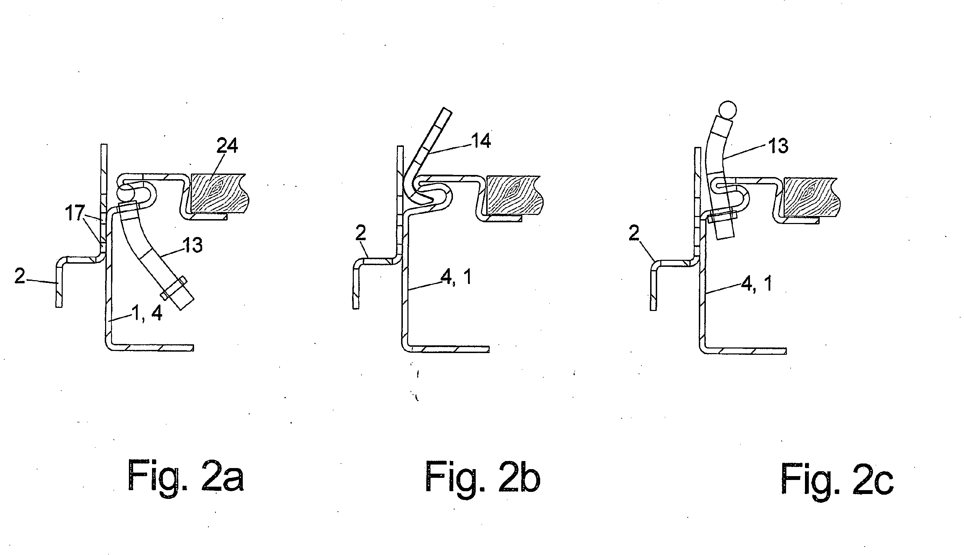

Um dies zu vermeiden, ist bei der Bauform der **Figuren 2 a-c****,** die ansonsten den Figuren **1** a-c entsprechen, das erste Ergänzungsprofil **2** höher am mittleren Schenkel **4** des Hauptprofils **1 -** wiederum mittels der Bohrungen **17-**befestigt, so dass der nach oben weisende Schenkel dieses ersten Ergänzungsprofiles **2** über die Oberseite des Ladebodens **24** vorsteht und eine Anschlagleiste für zum äußeren Rand bewegte Paletten und andere Ladegüter darstellt, der die außerhalb dieses Schenkels verlaufende Seitenplane **28** - wie in Figur **1** a dargestellt - vor Beschädigungen schützt.

Wie die **Figuren 3 a-c** zeigen, kann der für vor allem für die Zurradapter **14** benötigte Abstand **8** auf der Außenseite auch begrenzt werden durch eine feste, herab klappbare Bordwand **25,** die den unteren Bereich der Seitenwand des Aufbaus bildet, während der Bereich darüber in der Regel wiederum meist von einer Seitenplane **28** gebildet wird.

In diesem Fall sind auf der Außenseite des mittleren Schenkels **4** des Hauptprofiles **1** in Längsrichtung **10** beabstandet Bordwandgelenke **19** befestigt, insbesondere verschweißt, an denen die Bordwand **25** gelenkig befestigt ist, so dass sie zwischen einem vertikal nach oben aufragenden geschlossenen Zustand und einem annähernd vertikal nach unten hängenden geöffneten Zustand hin und her verschwenkbar sind, wie in den Figuren **3** a-c eingezeichnet.

In dem vertikal nach oben aufragenden geschlossenen Zustand stellt dann die Innenseite der Bordwand **25** die äußere Begrenzung für den Abstand **8** dar, der benötigt wird, damit ein eingehängter Zurrhaken **14** nicht nach außen oben unter Last herausgezogen werden kann.

In Längsrichtung **10** im Bereich zwischen den Bordwandgelenken **19** ist auf der Außenseite des mittleren Schenkels **4** des Hauptprofils **1** ferner ein zweites Ergänzungsprofil **22** befestigt, insbesondere verschweißt, welches U-förmig ist mit vorzugsweise zwei unterschiedlich langen freien Schenkeln.

Dieses zweite Ergänzungsprofil **22** wird mit den freien Schenkeln nach unten weisend und mit dem längeren freien Schenkel am mittleren Schenkel **4** befestigt.

Der im Abstand zum mittleren Schenkel **4** frei nach unten auslaufende andere Schenkel dieses zweiten Ergänzungsprofils **22** dient dann wiederum zum Einhängen von Planenhaken **26.**

Sowohl das Hauptprofil **1** als auch das erste Ergänzungsprofil **2** als auch das zweite Ergänzungsprofil **22** sind Blechbiegeteile, deren Blechmaterial eine jeweils gleichbleibende Dicke aufweist. Dadurch ist es möglich, die Durchbrüche **12** vor dem Biegen zum Beispiel mittels Laserschneiden herzustellen, was wesentlich einfacher möglich ist als im gekanteten Zustand.

Sofern die Bordwand **25** nicht über die gesamte Länge des Nutzfahrzeuges durchgeht, sondern durch feste senkrechte Streben des Aufbaus, die sogenannten Rungen, unterbrochen wird, werden auch die Aufnahmen für solche Rungen, die sogenannten Rungenlager **20,** an der Außenseite des mittleren Schenkels **4** des Hauptprofiles **1** befestigt, insbesondere verschweißt, wie in **Figur 3** **c** angedeutet.

**Figur 4** zeigt - betrachtet in Querrichtung **11,** also von außen auf den Außenrahmen - im linken Bereich ein Bordwandgelenk **19**, und die daran befestigte Bordwand **25** in der hochgeklappten, also der herabgeklappten, Stellung.

Auf einer Seite neben dem Bordwandgelenk **19** ist das zweite Ergänzungsprofil **22** dargestellt sowie in dessen Bereich, aber in Blickrichtung dahinter liegend, ein Zurrhaken **13** im nach unten abgelegten, nicht benötigten Zustand, der somit nicht über die Oberkante des Ladebodens **24** aufragt.

Im rechten Bildbereich ist zum einen ein eingesetzter Zurradapter **14 -** ohne Spanngurt - zu sehen und daneben in einem Paar von Durchbrüchen **12** ein Zurrhaken **13** im hochgezogenen Benutzungszustand, aus Übersichtlichkeitsgründen jedoch auch ohne daran befestigtem Spanngurt.

In dem rechten Bildbereich ist ferner das erste Ergänzungsprofil **2** dargestellt, und zwar im Bereich des Zurradapters **14** in der niedrigen Montagelage gemäß den **Figuren 1 a-c**, also ohne Palettenanschlagfunktion, und im Bereich des rechten Zurrhakens **13** in der hohen Montagelage mit der Funktion als Palettenanschlagleiste.

### BEZUGSZEICHENLISTE

- **1**: Hauptprofil
- **2**: erstes Ergänzungsprofil
- **3**a, b: freier Schenkel
- **4**: mittlerer Schenkel
- **5**: Kröpfung
- **6**: Einbuchtung
- **7**a: oberes freies Ende
- **7**b: unteres freies Ende
- **8**: Abstand
- **9**a, b: Einbuchtungs-Schenkel
- **10**: Längsrichtung
- **11**: Querrichtung
- **12**: Durchbruch
- **13**: Zurrhaken
- **13**a: vertikaler Schenkel
- **13**b: ober Querbolzen
- **14**: Zurradapter
- **15**: Rückzugsperre
- **16**a, b: Biegung
- **17**: Bohrung
- **18**: Bohrung
- **19**: Bordwand-Gelenk
- **20**: Rungenlager
- **21**: Abstand
- **22**: zweites Ergänzungsprofil
- **23**: Querträger
- **24**: Ladeboden
- **25**: Bordwand
- **26**: Planenhaken
- **27**: Spanngurt
- **28**: Seitenplane
- **29**: Planenspanner

## Patentansprüche

1. Außenrahmen für einen Lastfahrzeug-Aufbau mit einem im Querschnitt etwa C-förmigen Hauptprofil **(1)**, mit zwei freien Schenkel **(3a, 3b)** und einem diese verbindenden, zur Außenseite weisenden, mittleren Schenkel **(4)**, wobei
- im freien Ende des oberen freien Schenkels **(3a, 3b)** zwei gegenläufige Kröpfungen **(5)** angeordnet sind zum Auflegen des Ladebodens **(24),**
- am Übergang zum oberen freien Schenkel **(3a)** der mittlere Schenkel **(4)** eine zur Außenseite hin offene Einbuchtung **(6)** aufweist, deren oberes freies Ende **(7a)** gegenüber dem unteren freien Ende **(7b)** um einen Abstand **(8)** nach innen zurückversetzt ist,
**dadurch gekennzeichnet, dass**
- in Längsrichtung **(10)** des Hauptprofiles **(1)** beanstandet Paare von Durchbrüchen **(12)** im oberen freien Schenkel **(3a)** sowohl in dem oberen Einbuchtungs-Schenkel **(9a)** als auch dem unteren Einbuchtungs-Schenkel **(9b)** vorhanden sind, die zueinander fluchten.

2. Außenrahmen nach Anspruch **1**,
**dadurch gekennzeichnet, dass**
sich durch ein Paar von Durchbrüchen **(12)** jeweils ein Zurrhaken **(13)** hindurch erstreckt, der vertikal bewegbar ist und bis unter das Niveau der Oberseite des Ladebodens **(24)** absenkbar ist, aber so gestaltet ist, dass er weder nach oben noch nach unten vollständig aus dem Paar von Durchbrüchen **(12)** herausgezogen werden kann.

3. Außenrahmen nach einem der vorhergehenden Ansprüche,
**dadurch gekennzeichnet, dass**
der obere Durchbruch **(12)** eines Paares größer dimensioniert ist als der untere Durchbruch, insbesondere in Längsrichtung **(10)** länger dimensioniert ist, und/oder der obere Durchbruch **(12)** eines Paares zur Außenseite hin offen ist.

4. Außenrahmen nach einem der vorhergehenden Ansprüche,
**dadurch gekennzeichnet, dass**
ein Ende, insbesondere das obere Ende, des Zurrhakens **(13)** verdickt ist insbesondere betrachtet quer zur Längsrichtung **(10).**

5. Außenrahmen nach einem der vorhergehenden Ansprüche,
**dadurch gekennzeichnet, dass**
sich durch den Abstand **(8)** hindurch wenigstens ein Zurradapter **(14)** in die Einbuchtung **(6)** hinein erstreckt, der nach oben über das Niveau des oberen freien Schenkels **(3a)** vorsteht und in Längsrichtung **(10)** relativ zum Hauptprofil **(1)** verschiebbar ist.

6. Außenrahmen nach einem der vorhergehenden Ansprüche,
**dadurch gekennzeichnet, dass**
auf der Außenseite des mittleren Schenkels **(4)** als weiteres Bauteil des Außenrahmens ein erstes Ergänzungsprofil **(2)** oder zweites Ergänzungsprofil **(22)** befestigt, insbesondere vernietet oder verschweißt, ist.

7. Außenrahmen nach einem der vorhergehenden Ansprüche,
**dadurch gekennzeichnet, dass**
das Hauptprofil **(1)** und/oder das Ergänzungsprofil **(2, 22)** aus Stahl bestehen, und insbesondere alle Profile **(1, 2, 22)** Blechbiegeteile sind.

8. Außenrahmen nach einem der vorhergehenden Ansprüche,
**dadurch gekennzeichnet, dass**
das erste Ergänzungsprofil **(2)** im Querschnitt Z-förmig mit zwei Biegungen **(16a, b)** um jeweils etwa **90°** ist und mit übereinstimmender Längsrichtung **(10)** zur Längsrichtung **(10)** des Hauptprofils **(1)** auf dessen Außenseite so befestigt ist, dass der im Abstand **(21)** zum mittleren Schenkel **(4)** frei endende Schenkel des ersten Ergänzungsprofiles **(2)** nach unten weist.

9. Außenrahmen nach einem der vorhergehenden Ansprüche,
**dadurch gekennzeichnet, dass**
das erste Ergänzungsprofil **(2)** und/oder der mittlere Schenkel **(4)** des Hauptprofiles **(1)** Befestigungsvorrichtungen, insbesondere Bohrungen **(17),** auf zwei unterschiedlichen Höhen aufweisen zum Befestigen des ersten Ergänzungsprofiles **(2)** auf zwei unterschiedlichen Höhen relativ zu Hauptprofil **(1).**

10. Außenrahmen nach einem der vorhergehenden Ansprüche,
**dadurch gekennzeichnet, dass**
entweder das Ergänzungsprofil **(2)** mit seinem nach oben weisenden freien Schenkel auf oder knapp unterhalb der Oberseite des oberen freien Schenkels **(3a)** des Hauptprofiles **(1)** endet,
oder das Ergänzungsprofil **(2)** mit seinem nach oben weisenden freien Schenkel oberhalb der Oberseite des oberen freien Schenkels **(3a)** des Hauptprofiles **(1)** endet.

11. Außenrahmen nach einem der vorhergehenden Ansprüche,
**dadurch gekennzeichnet, dass**
das zweite Ergänzungsprofil **(22)** im Querschnitt U-förmig ist und mit übereinstimmender Längsrichtung **(10)** zur Längsrichtung **(10)** des Hauptprofils **(1)** mit nach unten weisenden, insbesondere unterschiedlich langen, frei endenden Schenkeln auf dessen Außenseite so befestigt ist, dass der im Abstand **(21)** zum mittleren Schenkel **(4)** des Hauptprofils **(1)** frei endende Schenkel des zweiten Ergänzungsprofiles **(2)** nach unten weist.

12. **Fahrzeug-Aufbau** mit einem Außenrahmen,
**dadurch gekennzeichnet, dass**
der Außenrahmen gemäß einem der vorhergehenden Ansprüche gestaltet ist.

13. **Verfahren** zum Herstellen eines Außenrahmens nach einem der vorhergehenden Ansprüche, indem
- ebene Blechzuschnitte hergestellt werden für Hauptprofil **(1),** erstes Ergänzungsprofil **(2)** und zweites Ergänzungsprofil **(22)**,
- in dem Blechzuschnitt für das Hauptprofil **(1)** die Durchbrüche **(12)** hergestellt werden,
- in die Blechzuschnitte für die-Profile **(2,22)** Durchgangs-Bohrungen **(17)** eingebracht werden,
- die Blechzuschnitte zu den jeweiligen Profilen **(1, 2, 22)** gebogen werden,
- an dem Hauptprofil **(1)** ein Ergänzungsprofil **(2 oder 22)** fixiert wird,
- von oben her durch jeweils ein Paar von Durchbrüchen **(12)** ein Zurrhaken **(13)** durchgeschoben und am unteren Ende mit einer Rückzugsperre **(15)** versehen wird.

## Claims

1. An exterior frame for a truck bed, the exterior frame comprising a main profile (1) that has an approximately C-shaped cross section, with two free arms (3a, 3b) and a center arm (4) that is outward oriented and connects the two free arms,
wherein
- two opposite elbows (5) are arranged in a free end of the upper free arm (3a, b) for applying a loading deck (24),
- the center arm (4) has a recess (6) at a transition to the upper free arm (3a) which recess is open towards the outside wherein an upper free end (7a) of the recess is moved inward relative to a lower free end (7b) of the recess by a distance (8),
**characterized in that**,
- pairs of pass through openings (12) are provided in the upper free arm (3a) in an upper recess arm (9a) and also in a lower recess arm (9b), wherein the pairs of pass through openings (12) are offset in a longitudinal direction of the main profile (1) and aligned with each other.

2. The exterior frame according to claim 1,
**characterized in that** a rigging hook (13) respectively extends through a pair of pass through openings (12) wherein the rigging hook is vertically movable and lowerable under a level of an upper side of the loading deck (24), wherein the rigging hook is configured so that it is not pullable in upward direction nor in downward direction from the pair of pass through openings (12) in its entirety.

3. The exterior frame according to one of the preceding claims,
**characterized in that** an upper pass through opening (12) of a pair is sized larger than a lower pass through opening, in particular sized longer in the longitudinal direction (10) and/or the pass through opening (12) is open towards an outside.

4. The exterior frame according to one of the preceding claims,
**characterized in that** an end, in particular an upper end of the rigging hook (13) is thickened, in particular transversal to the longitudinal direction (10).

5. The exterior frame according to one of the preceding claims,
**characterized in that** at least one rigging adapter (14) extends through the distance (8) into the recess (6), wherein the at least one rigging adapter protrudes in an upward direction beyond the level of the upper free arm (3a) and is movable in the longitudinal direction (10) relative to the main profile (1).

6. The exterior frame according to one of the preceding claims,
**characterized in that** a first axillary profile (2) or a second axillary profile (22) is attached at an outside of the center arm (4) as an additional component of the exterior frame, in particular riveted or welded.

7. The exterior frame according to one of the preceding claims,
**characterized in that**
the main profile (1) and/or the auxiliary profile (2, 22) are made from steel and in particular all profiles (1, 2, 22) are folded sheet metal components.

8. The exterior frame according to one of the preceding claims,
**characterized in that** the first auxiliary profile (2) has a Z-shaped cross section with two folds (16a, b) by respectively approximately 90° and is attached with its longitudinal direction (10) aligned with the longitudinal direction (10) of the main profile on the outside of the main profile so that an arm of the first auxiliary profile (2) which arm terminates freely at a distance (21) to the upper arm (4) is oriented downward.

9. The exterior frame according to one of the preceding claims,
**characterized in that** the first auxiliary profile (2), and/or the center arm (4) of the main profile (1) includes attachment devices, in particular bore holes (17) at two different levels relative to the main profile (1) for attaching the first auxiliary profile.

10. The exterior frame according to one of the preceding claims,
**characterized in that**
either the auxiliary profile (2) with its upward oriented free arm terminates at or slightly below a top side of the upper free arm (3a) of the main profile (1) or the auxiliary profile (2) with its upward oriented free arm terminates above the top side of the upper fee arm (3a) of the main profile (1).

11. The exterior frame according to one of the preceding claims,
**characterized in that** the second auxiliary profile (22) is U-shaped in cross section and its longitudinal direction (10) coincides with the with the longitudinal direction (10) of the main profile (1) and the second auxiliary profile (22) is attached at an outside of the main profile (1) with downward oriented, in particular different length freely terminating arms so that a freely terminating arm of the auxiliary profile (2) is oriented downward wherein the arm of the auxiliary profile (2) terminates at a distance profile (21) from the center arm (4) of the main profile (1).

12. A vehicle bed with an exterior frame,
**characterized in that** the exterior frame is configured according to one of the preceding claims.

13. A method for producing an exterior frame according to one of the preceding claims, comprising the steps:
- producing flat sheet metal blanks for the main profile (1), the first auxiliary profile (2), the second auxiliary profile (22),
- fabricating the pass through openings (12) in the sheet metal blank for the main profile (1),
- introducing pass through bore holes (17) into the sheet metal blanks for the profiles (2, 22),
- folding the sheet metal blanks to form the respective profiles (1, 2, 22),
- fixating an auxiliary profile (2, 22) at the main profile (1), and
- pushing a rigging hook (13) from above respectively through a pair of pass through openings (12) and providing the rigging hook (13) at a lower end with a pullback lock (15).

## Revendications

1. Cadre externe pour une structure de véhicule utilitaire avec un profilé principal (1) plus ou moins en forme de C en coupe transversale, avec deux branches libres (3a, 3b) et une barrette centrale (4) tournée vers l'extérieur reliant celles-ci, dans lequel :
- à l'extrémité libre de la branche supérieure libre (3a, 3b) sont ménagés deux coudes opposés (5) pour appliquer la plateforme de chargement (24),
- au niveau de la transition avec la branche supérieure libre (3a), la barrette centrale (4) présente un renfoncement (6) ouvert vers l'extérieur, dont l'extrémité supérieure libre (7a) est refoulée vers l'intérieur d'un certain espacement (8) par rapport à l'extrémité inférieure libre (7b),
**caractérisé en ce que** :
- des paires de trous (12) espacées dans la direction longitudinale (10) du profilé principal (1) sont ménagées dans la branche supérieure libre (3a) autant dans la branche supérieure (9a) du renfoncement que dans la branche inférieure (9b) du renfoncement, lesquelles paires de trous s'alignent l'un sur l'autre.

2. Cadre externe selon la revendication 1,
**caractérisé en ce que** :
à travers une paire de trous (12) s'étend respectivement un crochet d'amarrage (13) qui peut se déplacer verticalement et descendre jusqu'en dessous du niveau de la face supérieure de la plateforme de chargement (24), mais qui est conçu pour ne pas pouvoir être complètement retiré de la paire de trous (12) ni vers le haut ni vers le bas.

3. Cadre externe selon l'une quelconque des revendications précédentes, **caractérisé en ce que** :
le trou supérieur (12) d'une paire est dimensionné plus grand que le trou inférieur, en particulier est dimensionné plus long dans la direction longitudinale (10) et/ou le trou supérieur (12) d'une paire est ouvert vers l'extérieur.

4. Cadre externe selon l'une quelconque des revendications précédentes, **caractérisé en ce que** :
une extrémité, en particulier l'extrémité supérieure, du crochet d'amarrage (13) est épaissie en particulier lorsque l'on se place transversalement à la direction longitudinale (10).

5. Cadre externe selon l'une quelconque des revendications précédentes, **caractérisé en ce que** :
un adaptateur d'amarrage (14) s'étend à travers l'espacement (8) dans le renfoncement (6), lequel adaptateur fait saillie vers le haut au-dessus du niveau de la branche supérieure libre (3a) et peut se déplacer dans la direction longitudinale (10) par rapport au profilé principal (1).

6. Cadre externe selon l'une quelconque des revendications précédentes, **caractérisé en ce que** :
sur la face externe de la branche centrale (4) est fixé comme autre pièce du cadre externe un premier profilé complémentaire (2) ou un second profilé complémentaire (22), en particulier riveté ou soudé.

7. Cadre externe selon l'une quelconque des revendications précédentes, **caractérisé en ce que** :
le profilé principal (1) et/ou le profilé complémentaire (2, 22) est ou sont constitués d'acier et, en particulier, tous les profilés (1, 2, 22) sont des pièces de tôle pliées.

8. Cadre externe selon l'une quelconque des revendications précédentes, **caractérisé en ce que** :
le premier profilé complémentaire (2) est de forme en Z en coupe transversale avec deux coudes (16a, b) sur respectivement environ 90° et est fixé avec une direction longitudinale correspondante (10) par rapport à la direction longitudinale (10) du profilé principal (1) sur sa face externe de sorte que la branche du premier profilé complémentaire (2) se terminant librement à la distance (21) de la branche centrale (4) soit tournée vers le bas.

9. Cadre externe selon l'une quelconque des revendications précédentes, **caractérisé en ce que** :
le premier profilé complémentaire (2) et/ou la branche centrale (4) du profilé principal (1) présente(nt) des dispositifs de fixation, en particulier des alésages (17) sur deux hauteurs différentes pour fixer le premier profilé complémentaire (2) à deux hauteurs différentes par rapport au profilé principal (1).

10. Cadre externe selon l'une quelconque des revendications précédentes, **caractérisé en ce que** :
le profilé complémentaire (2) se termine avec sa branche libre tournée vers le haut sur ou juste en dessous de la face supérieure de la branche supérieure libre (3a) du profilé principal (1),
ou le profilé complémentaire (2) se termine avec sa branche libre tournée vers le haut au-dessus de la branche supérieure libre (3a) du profilé principal (1).

11. Cadre externe selon l'une quelconque des revendications précédentes, **caractérisé en ce que** :
le second profilé complémentaire (22) a une forme en U en coupe transversale et, avec une direction longitudinale correspondante par rapport à la direction longitudinale (10) du profilé principal (1), est fixé aux branches tournées vers le bas, en particulier de longueur différente, se terminant librement sur sa face externe en sorte que la branche du second profilé complémentaire (2) se terminant librement à la distance (21) de la branche centrale (4) du profilé principal (1) soit tournée vers le bas.

12. Structure de véhicule comprenant un cadre externe,
**caractérisée en ce que** :
le cadre externe est conçu selon l'une quelconque des revendications précédentes.

13. Procédé de fabrication d'un cadre externe selon l'une quelconque des revendications précédentes de la manière suivante :
- des sections de tôle planes sont fabriquées pour le profilé principal (1), le premier profilé complémentaire (2) et le second profilé complémentaire (22),
- les trous (12) sont ménagés dans la section de tôle pour le profilé principal (1),
- des alésages de passage (17) sont façonnées dans les sections de tôle pour les profilés (2, 22),
- les sections de tôle sont cintrées pour les profilés respectifs (1, 2, 22),
- un profilé complémentaire (2 ou 22) est fixé sur le profilé principal (1), et
- par le dessus, un crochet d'amarrage (13) est enfilé respectivement à travers une paire de trous (12) et pourvu, à l'extrémité inférieure, d'un arrêt de retour (15).
